# EUROPEAN PATENT SPECIFICATION

(11) **EP 4 130 841 B1**
(45) Date of publication and mention of the grant of the patent: **11.06.2025**
(21) Application number: 21189724.4
(22) Date of filing: 04.08.2021
(51) Int. Cl.: G02B 21/24, G01N 1/42, H01J 37/20

(54) **SYSTEM FOR LOADING AND/OR MANIPULATING A SAMPLE IN A SAMPLE TRANSFER DEVICE**
SYSTEM ZUM LADEN UND/ODER MANIPULIEREN EINER PROBE IN EINER PROBENÜBERTRAGUNGSVORRICHTUNG
SYSTÈME DE CHARGEMENT ET/OU DE MANIPULATION D'ÉCHANTILLON DANS UN DISPOSITIF DE TRANSFERT D'ÉCHANTILLONS

(43) Date of publication of application: 08.02.2023
(73) Proprietor: Leica Mikrosysteme GmbH, 1170 Wien (AT)
(72) Inventor: LIHL, Reinhard, 1120 Wien (AT)
(74) Representative: Maiwald GmbH

(56) References cited:
- DE-A1- 102014 110 722
- LEICA MICROSYSTEMS GMBH: "Leica EM VCT100 Vacuum Cryo Transfer From Preparation to Analysis", 1 May 2009 (2009-05-01), Vienna, Austria, pages 1 - 12, XP055462195, Retrieved from the Internet <URL:https://www.leica-microsystems.com/fileadmin/downloads/Leica%20EM%20VCT100/Brochures/Leica_EMVCT100_Brochure_EN.pdf> [retrieved on 20180323]
- TACKE SEBASTIAN ET AL: "A streamlined workflow for automated cryo focused ion beam milling", JOURNAL OF STRUCTURAL BIOLOGY, ACADEMIC PRESS, UNITED STATES, vol. 213, no. 3, 8 May 2021 (2021-05-08), XP086756739, ISSN: 1047-8477, [retrieved on 20210508], DOI: 10.1016/J.JSB.2021.107743

## Description

### Field

The present inventive concept relates to a system for loading a sample into and/or for manipulating a sample in a sample transfer device at cryogenic temperatures, said system comprising the sample transfer device configured to receive a sample through a receiving opening of the sample transfer device and configured to transfer the sample to a processing or analysing unit More particularly, the sample transfer device of the system according to the present inventive concept is used in the field of cryo-microscopy for transferring a sample to be examined, for instance, to a cryogenic-electron microscope (cryo-EM) or to a cryo-light microscope (cryo-LM), or, in another example, for loading and/or manipulating a sample or sample carrier or sample holder inside the sample transfer device and then transferring the sample or sample carrier or the sample holder to another processing unit like a FIB (focused ion beam) device for further processing the sample or to an analysing unit such as a cryo-microscope for examining the sample.

### Background

US 10,144,010 B2 discloses a manipulation container for cryo-microscopy, which manipulation container essentially corresponds to a sample transfer device of the kind discussed above. Cryo-microscopy particularly includes cryo-light microscopy and cryo-electron microscopy.

Cryofixation is a sample preparation method frequently used in cryo-electron microscopy. In it, a water-containing sample is frozen very quickly (cryofixed) to a temperature of less than -150° C., i.e. it is cooled very rapidly in order to avoid the formation of ice crystals. Cryofixation has proven to be particularly suitable for investigations of structural biology. The objects to be investigated, for example cells, enzymes, viruses, or lipid layers, thereby become embedded in a thin, vitrified ice layer. The great advantage of cryofixation is that the biological structures can be obtained in their natural state. For example, a biological process can be halted at any point in time by cryofixation, and investigated in that vitrified state, for example in a cryo-electron microscope but also in a light microscope with corresponding sample cooling; cryo-light microscopy serves principally to locate relevant regions in the sample, which can be noted and then viewed in more detail in a cryo-electron microscope.

The frozen samples, which as a general rule are located on electron-microscope sample carriers known per se, for example a grid or a pin stub mount for scanning electron microscopy, must be conveyed (under the aforesaid cryogenic conditions and with water excluded) into corresponding sample carrier mounts that can subsequently be conveyed in appropriate holders, into the aforesaid microscopes.

What have hitherto been used for this are fairly improvised solutions in which liquid nitrogen is stored, for example, in a Styrofoam container in which the requisite manipulation steps for conveying the grid into the sample carrier mounts were performed. The formation of cryogenic nitrogen gas from the liquid nitrogen on the one hand ensures the necessary low temperature and on the other hand creates an anhydrous atmosphere in the Styrofoam container, so that contamination of the samples with water, and consequently with ice crystals, could be prevented.

In order not to impair the quality of the frozen samples, it is very important that they be transferred in cooled and contamination-free, particularly water-free, fashion between the processing units being used, for example a cryofixation device, a FIB ("Focused Ion Beam") device, a freeze fracture apparatus, or a coating apparatus, and the analytical devices, in this case principally a cryo-light microscope and/or a cryo-electron microscope. For this as well, in everyday laboratory practice it has hitherto been usual to resort to fairly improvised solutions or to specifically fabricate loading and transfer systems in-house.

The samples to be examined first have to be placed on a sample carrier/grid, and the sample carrier is then typically placed on a sample holder/cartridge. The sample holder/cartridge is then loaded into the sample transfer device, also known as cryo-CLEM shuttle ("cryo-light-electron-microscopy shuttle"). The sample transfer device can be connected to e.g. the cryo-stage of a cryo-microscope and, by transferring the sample holder/cartridge to the cryo-stage, the sample is transferred to the cryo-microscope. It is noted that other embodiments of this process are possible and other applications can be envisaged, e.g. where a sample or a sample carrier is directly loaded into a sample transfer device without the need of a sample holder/cartridge.

In the situations described above, frozen samples are handled in a cold environment, e.g. in cold gaseous N₂ above a level of liquid N₂, said liquid N₂ (LN₂) being filled e.g. in a chamber inside the sample transfer device. During this process, ice crystals can form in the transition area between the cold gas and the surrounding atmosphere containing humid air. Even more and bigger ice crystals can form during manipulation of frozen samples when this transition area is turbulently mixed by movement of a user's hand or tool. The resulting ice crystals or flakes can fall on the frozen sample and can contaminate it up to a degree where further use for subsequent process steps is no longer possible.

A standard solution is to create a steady stream of cryogenic gas, such as gaseous N₂, out of a sample area around the frozen sample. This solution, however, has the disadvantage that large amounts of liquid cryogenic gas need to be vaporized to maintain a sufficient flow of cryogenic gas. Furthermore, such a flow can cause turbulences at edges or obstacles, and eddies of this turbulent flow can transport ice crystals into the sample area.

In order to reduce the impact of such turbulent flows, it is common practice to cover any openings to the sample area by lids at least for the time where no manipulation is done. Often, sliders are provided such that the lids can be opened to only release the smallest necessary area for manipulation. This, on the one hand, hinders free manipulation and, on the other hand, still involves the risk of introducing ice crystals through the residual openings.

Document DE 10 2014 110 722 A1 relates to a loading station for cryo samples. A sample transfer device can be coupled to a loading device. The sample transfer device has an opening for loading the sample into it and the loading device has a corresponding opening such that a rod of the sample transfer device can be brought into the loading device. The interface between the openings is provided at a lateral side.

### Summary

An object of the present inventive concept is to provide a system for loading a sample into a sample transfer device and/or for manipulating a sample placed in a sample transfer device at cryogenic temperatures, the use of this system minimizing the risk of contamination or devitrification of a sample loaded into and/or manipulated in said sample transfer device of the kind discussed above.

The present inventive concept provides a system for loading a sample into and/or for manipulating a sample in a sample transfer device at cryogenic temperatures according to claim 1. The term "manipulating" in this context includes an unloading of a sample from the sample transfer device. "Sample" in the context of this application is meant to include the sample itself, a sample carrier carrying the sample and/or a sample holder carrying a sample carrier and/or a sample. The system comprises the sample transfer device configured to receive the sample through a receiving opening of the sample transfer device and configured to transfer said sample to a processing or analysing unit. In other words, a sample and/or a sample carrier and/or a sample holder is received in the interior or in a chamber of the sample transfer device through a receiving opening of the sample transfer device. The system further comprises a dry box having an interface opening and being configured to be connected to the sample transfer device such that the interface opening of the dry box and the receiving opening of the sample transfer device are facing each other to enable a sample to be transferred from the dry box into the sample transfer device. In other words, the dry box is configured to be coupled to the sample transfer device via an interface opening. When coupling the dry box to the sample transfer device, the interface opening of the dry box is typically lying on top of or is located opposite the receiving opening of the sample transfer device through which a sample/sample carrier/sample holder can be transferred from the dry box into the sample transfer device or vice versa. Preferably, the interface opening provides access into the interior of a housing part of the dry box, which housing part forms a volume space that can be used for users' operations as described in more detail below.

With the system according to the present inventive concept, the sample transfer device and the dry box can be coupled or connected to each other and the resulting connection preferably constitutes a closed or a sealed connection providing a minimum of leakage airflow. As it is preferred to have a slight overpressure, particularly of cryogenic gas, inside the system when the sample transfer device is coupled to the dry box, the connection does not necessarily be hermetically sealed.

Further, it is preferred if the dry box and the sample transfer device are connectable to each other by a mechanical and/or magnetic connection. To this end, the contact surfaces of the dry box and the sample transfer device may be made of or comprise a magnetic material providing such a magnetic connection and/or may be formed of or comprise mechanical elements interacting with each other to provide a mechanical connection.

It should be noted that the system of the present inventive concept provides another different option to a system where a sample transfer device is handled within the inside of a glove box. While such a system is very effective to avoid contamination, manipulation of the small samples or sample carriers like TEM-grids in such a glove box is cumbersome. Furthermore, the transfer of the samples into the glove box and the transfer of the sample transfer device outside of the glove box need suitable lock systems. In contrast, the system according to the present inventive concept uses a dry box having an interface to a sample transfer device, and a sample transfer device having an interface to the dry box such that both, the dry box and the sample transfer device, can be connected to each other. As a sample can be frozen and/or even vitrified inside the dry box or a sample in its frozen or vitrified state can be transferred into and handled inside the dry box, there is no need for a sample lock system. Further, as the sample transfer system is not placed inside the dry box, no corresponding lock system for the sample transfer device is necessary.

In an embodiment, the dry box comprises an interface opening lid for opening and closing the interface opening of the dry box. The interface opening lid i.a. serves the purpose of being able to close the dry box, e.g. for generating a suitable atmosphere inside the dry box, preferably comprising an inert gas as its main component such as gaseous nitrogen e.g. from a gas cylinder or vaporized cryogenic gas, like vaporized LN₂ (liquid nitrogen).

In an embodiment, the sample transfer device comprises a receiving opening lid for opening and closing the receiving opening of the sample transfer device. The receiving opening lid, on the one hand, serves the purpose of being able to open the inside of the sample transfer device for loading the sample into and/or for manipulating the sample in the sample transfer device, and, on the other hand, serves the purpose of closing the receiving opening, e.g. before connecting the sample transfer device to a processing or analysing unit for transferring the sample. Further, before loading a sample/sample carrier into the sample transfer device, the receiving opening lid may be closed in order to generate a suitable atmosphere inside the sample transfer device, again e.g. an atmosphere of cold cryogenic gas like vaporized LN₂. Typically, the inside of the sample transfer device is filled to a certain level below the sample holder with LN₂ such that the sample/sample carrier/sample holder is in close vicinity to the bath of liquid nitrogen. In addition, the sample holder may have or be connected to "tentacles" extending into the liquid nitrogen bath to improve the cooling effect.

In this context, it is preferred if the dry box including the interface opening lid in its closed state is connectable to the sample transfer device including the receiving opening lid in its closed state. Thus, the closed sample transfer device may be connected to the closed dry box, each of them particularly being provided with suitable atmospheres, and after connecting the two units, the interface opening lid may be opened for opening the interface opening, and then, the receiving opening lid may be opened, particularly through the interface opening of the dry box, in order to open the receiving opening of the sample transfer device. In this state, a sample can be transferred from the dry box into the sample transfer device.

In this embodiment, it is particularly preferred if a distance between the interface opening lid in its closed state and the receiving opening lid in its closed state is as small as possible, preferably in the range of 0 to 10 mm or in the range of 0 to 5 mm, in a state where the dry box is connected to the sample transfer device. With these preferred distances, the interspace between the closed interface opening and the closed receiving opening resulting in a dead volume can be held as little as possible. This dead volume typically comprises air with a certain degree of humidity, which is flushed into the dry box when opening the interface opening lid and/or into the inside of the sample transfer device when opening the receiving opening lid.

In an embodiment, the dry box comprises an inlet for introducing an inert gas into the inside of the dry box. For instance, gaseous nitrogen e.g. from a gas cylinder may be introduced or liquid nitrogen may be vaporized outside of the dry box and the cold nitrogen gas may be introduced through the inlet into the dry box. Alternatively or additionally, an inert gas in its liquid state, like LN₂, for instance in a Dewar vessel, may be arranged inside the dry box such that vaporized inert gas is able to fill the volume of the dry box.

In an embodiment, the dry box comprises an outlet for discharging gas out of the inside of the dry box. The term "outlet" in this context comprises any gas leak, for instance, at the interface where the dry box is coupled to the sample transfer device or at other access openings into the dry box which are not hermetically sealed.

In an embodiment, the dry box comprises a sample supply container opening configured to be connected with a sample supply container. Such a sample supply container may contain tissue sections from a cryo-ultramicrotome or sample carriers from a grid plunger. The sample supply container is connected to the dry box such that a sample/sample carrier can be transferred from the sample supply container through the sample supply container opening of the dry box to the sample transfer device. This transfer takes place inside the dry box such that no contamination, particularly freezing of water, or even devitrification can occur. In the next step, typically the sample/sample carrier is mounted onto a sample holder/cartridge.

In this embodiment it is preferred if the dry box comprises a sample supply container opening lid for opening and closing the sample supply container opening of the dry box. This lid allows to only open the sample supply container opening after a suitable dry and cold atmosphere has been generated inside the dry box.

As already mentioned above, it is preferred if the dry box comprises an inert gas opening configured to be connected with an inert gas storage container. This storage container may be a Dewar vessel which is connected via the inert gas opening to the dry box such that vaporized inert gas can fill the inside of the dry box. Again, additionally or alternatively, an inert gas such as gaseous nitrogen can be taken from e.g. a gas cylinder. Again, it is preferred if the inert gas opening may be opened and closed by a corresponding inert gas opening lid.

In a preferred embodiment, the sample transfer device itself comprises an inert gas reservoir at cryogenic temperatures. As already mentioned above, a small chamber inside the sample transfer device can be filled with liquid nitrogen as an example for a cryogenic gas which vaporizes such that the inside of the sample transfer device is filled with a dry, cold and inert atmosphere. It is also possible to only use this source of cryogenic gas to fill the dry box with cryogenic gas; another source of cryogenic gas may be provided by the sample supply container when connected to the dry box. It is, however, preferred to use an additional source of cryogenic gas to build up the cryogenic atmosphere within a shorter time period.

In an embodiment, the dry box comprises a humidity sensor and/or a measuring device for detecting a humidity inside the dry box. This humidity sensor can be used for detecting a sufficiently low level of humidity inside the dry box, preferably the relative humidity is less than 10% or even less than 5%, allowing to make use of the dry box, i.e. connecting the dry box with the sample transfer device and take the further steps of loading and/or manipulating a sample/sample carrier.

In a further embodiment, the dry box comprises at least one at least partly closable user opening providing a user access to the inside of the dry box. Through such user openings a user can enter the inside of the dry box for loading and/or manipulating a sample by appropriate user tools, like a pair of tweezers. In order to protect the cryogenic atmosphere inside the dry box, such user openings should be at least partly closable, e.g. by a foil cover and/or by a corresponding user opening door. The foil cover may have one or more slits, preferably two slits being perpendicular to one another, such that a user hand can move through the foil cover.

In another preferred embodiment, the user opening of the dry box, alternatively or additionally, comprises a glove mounting for mounting a glove which extends, when mounted, into the inside of the dry box. Such a glove mounted on the glove mounting enables a user to work inside the dry box without affecting the cryogenic atmosphere inside the dry box.

In a further embodiment, the dry box comprises an electromechanical or mechanical mechanism for decoupling the dry box from the sample transfer device and for coupling the dry box with the sample transfer device. Such a coupling mechanism enables bringing together the respective contact surfaces of the dry box and the sample transfer device such that a connection of the two units becomes possible where the interface opening of the dry box and the receiving opening of the sample transfer device are facing each other. The connection of the two units may be realised only in that the respective contact surfaces lie on top of each other. Such a connection may be enhanced by corresponding profiles in the contact surfaces, which interlock with each other. Although not necessary, there may be other mechanical and/or magnetic connection means for achieving a more robust and reliable connection between the two units. In an embodiment where a coupling mechanism is provided, joining of the two units is facilitated. In general, such a coupling mechanism may consist of or comprise an electromechanically controlled joining of the two units such that they are coupled to each other or a positively driven (e.g. rail-guided or threaded) mechanical mechanism for joining the two units or a combination of such mechanisms.

In a preferred embodiment, the coupling mechanism comprises an eccentric mechanism such that one full rotation of the corresponding cam member results in a decoupling and a coupling of the two units. More particularly, it is preferred if the eccentric mechanism comprises eccentric wheels at a bottom side of the dry box. In this embodiment, the dry box is mounted on a holder or carrier or frame for supporting the dry box against ground. Eccentric wheels are mounted to the bottom part of this holder/carrier/frame such that one full rotation of the eccentric wheels lifts the dry box up and lowers the dry box again. The sample transfer device can be placed on the same ground beneath the dry box at a position that allows coupling of the two units. By lowering the frame of the dry box through rotation of the eccentric wheels a coupling of the two units is achieved, while a further rotation of the eccentric wheels leads to a lifting of the dry box resulting in a decoupling of the two units.

In another embodiment, the dry box comprises a magnifying window at a topside of the dry box such that a user looking through said window into the inside of the dry box perceives a magnified image of any objects behind the magnifying window.

The present inventive concept also relates to a dry box configured to be used within a system according to the present inventive concept The dry box as such has been described in detail above such that reference is made to the foregoing description in order to avoid unnecessary repetition. It should be noted that the disclosure of the system including the dry box is also meant to be a disclosure of the dry box as such or, if necessary, of the dry box configured to be used with a system according to the present inventive concept. In particular, just to mention some features of the dry box, the dry box preferably comprises at least one of the following features:

An interface opening configured to be connected to a sample transfer device; the interface opening providing access into the interior of a housing part of the dry box, which housing part forms a volume space that can be used for users' operations; an interface opening lid for opening and closing the interface opening of the dry box; an inlet for introducing an inert gas into the inside of the dry box; an outlet for discharging gas out of the inside of the dry box; a sample supply container opening configured to be connected with a sample supply container; a sample supply container opening lid for opening and closing the sample supply container opening; an inert gas opening configured to be connected with an inert gas storage container; a humidity sensor/measuring device for detecting a humidity inside the dry box; at least one at least partly closable user opening providing a user access to the inside of the dry box; a foil cover at least partly covering the user opening; the user opening comprising a glove mounting for mounting a glove, which extends, when mounted, into the inside of the dry box; an electromechanical or mechanical coupling mechanism for decoupling the dry box from the sample transfer device and for coupling the dry box with the sample transfer device; the coupling mechanism comprising an eccentric mechanism; the eccentric mechanism comprising eccentric wheels at a bottom side or at a base part of a carrier/frame of the dry box; and a magnifying window at a top side of the dry box.

It should further be noted that the above features of the embodiments of the inventive concept can - wholly or in part - be combined to achieve other embodiments still falling under the scope of the present inventive concept as defined in the appended claims.

As used herein, the term "and/or" includes any and all combinations of one or more of the associated listed items and may be abbreviated as "/".

Although some aspects have been described in the context of an apparatus or device, it is clear that these aspects also represent a description of a method of operating such an apparatus or device.

Further embodiments and advantages of the present inventive concept are described below in connection with the following figures.

### Short description of the figures

Figure 1 schematically shows an embodiment of a system according to the present inventive concept,
Figure 2 schematically shows a view from above of a cross section in a horizontal direction through the dry box of the system of Figure 1,
Figure 3 and 4 show the system in a transparent side view in a coupled state (Figure 3) and a decoupled state (Figure 4), and
Figure 5 schematically shows an embodiment of a dry box according to the present inventive concept

### Detailed description

The figures are described comprehensively, same reference signs relating to same or at least structurally equivalent elements.

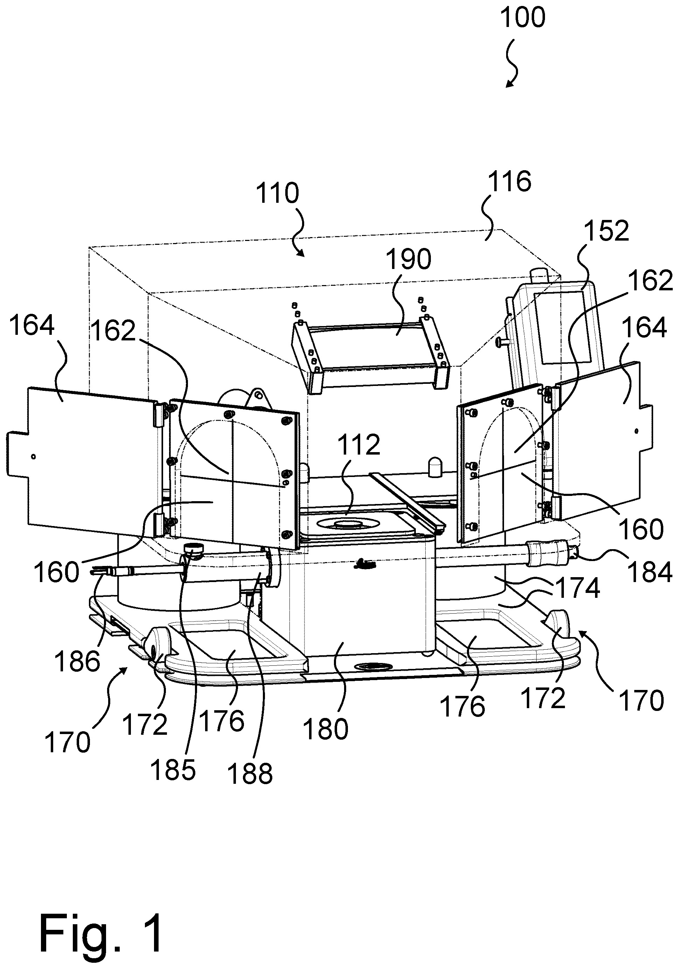

Figure 1 schematically shows an embodiment of a system according to the inventive concept in a perspective view, the dry box being shown transparently. The system is designated 100, the sample transfer device is designated 180 and the dry box is designated 110.

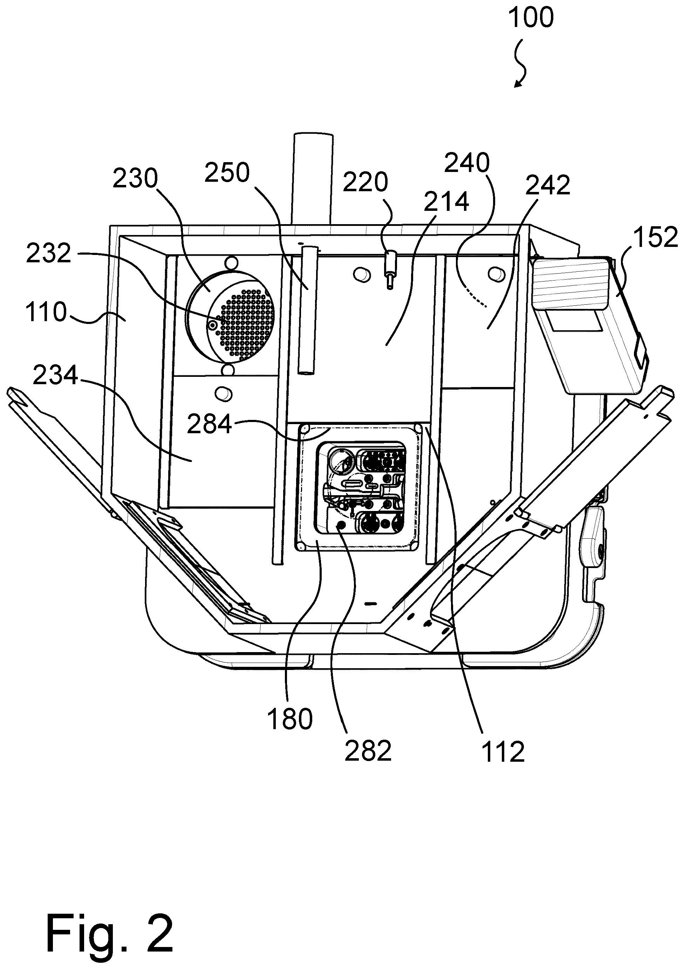

The sample transfer device 180 of Figure 1 comprises a transfer rod 184 having at its other end a receiving section 186 for a sample holder/cartridge as shown in Figure 1. In operation, the transfer rod 184 is retracted such that the receiving section 186 is positioned inside the sample transfer device 180 for being able to receive a sample holder which is typically arranged in the receiving opening 282 of the sample transfer device 180 (see also Figure 2). Typically, the sample holder is arranged in a loading position, and a sample or a sample carrier is placed onto or into the sample holder. In a next step, the transfer rod 184 is moved in its axial direction such that the receiving section 186 of the transfer rod can receive the sample holder which is moved through the connection tube 188 and outside of the connection tube 188 when shutter 185 is in its opened position. The sample on the sample holder is then transferred to a transfer position where the sample holder as such can be transferred e.g. to the cryo-stage of a cryo-microscope. The state of the sample transfer device 180 as shown in Figure 1 is only for illustrative purposes to better understand design and function of the sample transfer device 180.

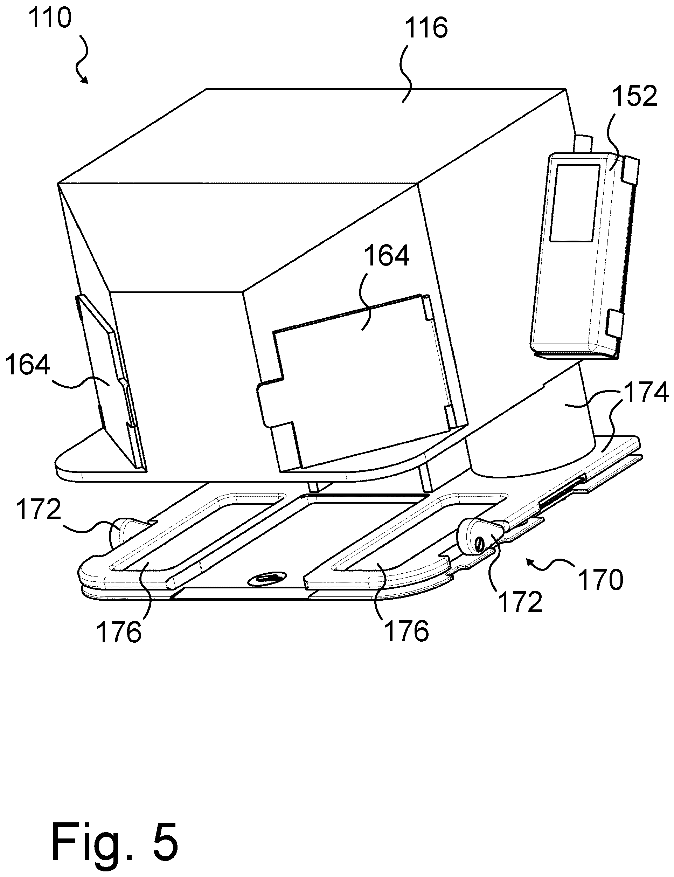

The housing part 116 (see also Figure 5) including the volume space of the dry box 110 can be made of a transparent or semi-transparent material and comprises in the embodiment of Figure 1 a magnifying window 190 enabling an operator to look into the dry box 110 and to monitor its inside. As the magnifying window 190 is directed onto the interface opening 112, it is possible to view any elements in the line of sight in magnified form. The humidity of the atmosphere in the volume space of the housing part 116 can be measured by a measuring device 152 connected to a humidity sensor 250 (see Fig. 2). The dry box 110 further has an interface opening 112, the frame of which is configured such that it can be placed on top of the sample transfer device 180 as shown in Figure 1. As the interface opening 112 is fitted onto the topside of the sample transfer device 180, a connection of the two units 180 and 110 is reached. In the connected state, the receiving opening 282 (see Figure 2) of the sample transfer device 180 faces the interface opening 112 of the dry box 110 such that a sample and/or a sample carrier and/or sample holder can be transferred from the dry box into the sample transfer device. The connection of the two units 180 and 110 as described above does not need to be a (hermetically) sealed connection but needs to be a sufficiently tight connection in order to avoid excessive gas leakage.

As shown in Figure 1, the dry box 110 further comprises two at least partly closable user openings 160 providing a user access to the inside of the dry box 110. The user openings 160 are partly closed by a foil cover 162 covering the user opening 160 and having two slits perpendicular to each other such that a user hand can enter the dry box 110 by pushing away the flexible slotted foil cover 162. Additionally, the user openings 160 may be closed by corresponding user opening doors 164.

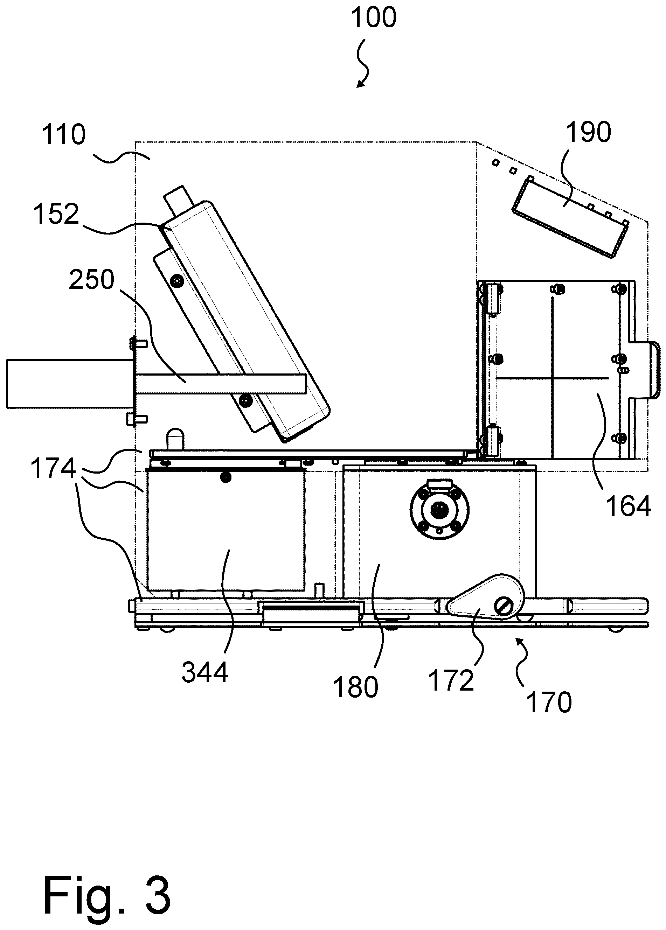

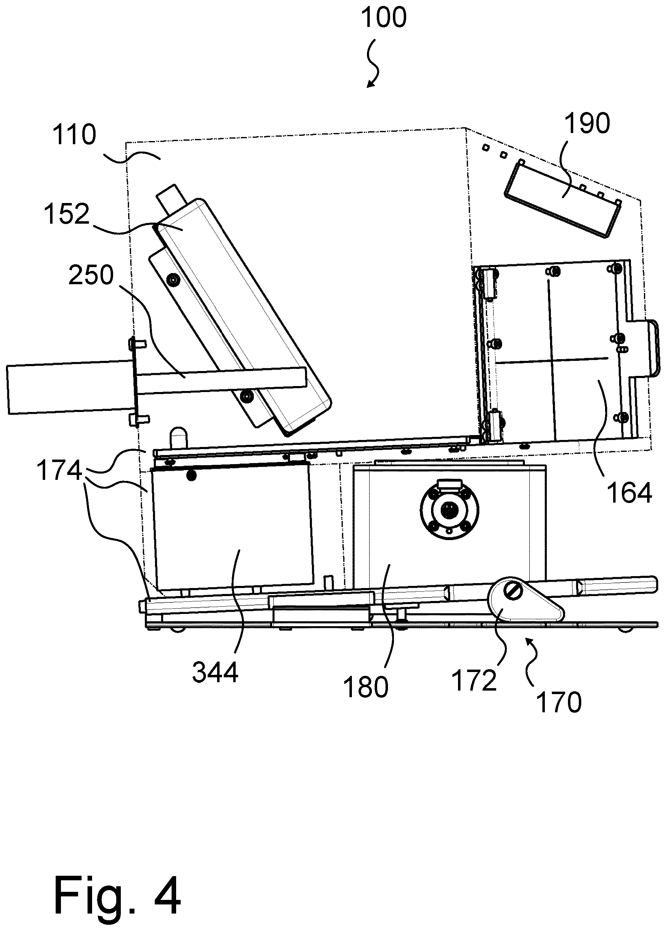

As can be further seen in Figure 1, the dry box 110 comprises a carrier or frame 174, which holds the interface opening 112 of the dry box 110 at a height corresponding to the height of the topside of the sample transfer device 180 as can be seen from Figure 1. The carrier or frame 174 comprises a base part 176 which is supported by ground and comprises two eccentric wheels 172 such that an eccentric mechanism 170 is formed which will be described in connection with Figures 3 or 4 later on. In the state showing Figure 1, the eccentric mechanism 170 couples the dry box 110 with the sample transfer device 180 by lowering the interface opening 112 of the dry box 110 onto the topside of the sample transfer device.

Figure 2 schematically shows a perspective view from above through the system 100 onto the topside of the sample transfer device 180 and onto elements arranged in the floor area of the volume space of the dry box 110.

The elements shown in Figure 2 are now described from left to right On the left there is a sample supply container opening 230 to which a sample supply container 232 can be connected, for instance, magnetically. As can be seen from Figure 2, the sample supply container 232 comprises a perforated plate typically located above a bath of liquid cryogenic gas, the perforated plate comprising small sample transfer containers loaded with grids or sapphire plates. The sample supply container opening 232 can be opened and closed by a sample supply container opening lid 234. The next element shown in Figure 2 is an interface opening lid 214 for opening and closing the interface opening 112. The interface opening of the dry box 110 allows access to the sample transfer device 180 which is arranged below interface opening 112. The next element shown in Figure 2 is an inert gas opening lid 242 shown in its closed state covering an inert gas opening 240. Such an inert gas opening 240 serves the purpose of allowing cold inert gas streaming inside the dry box 110. The inert gas opening 240 can be connected to an inert gas storage container 344 (see Figure 3). Alternatively, 240 can designate another sample supply container opening to which a sample supply container can be connected, which sample supply container opening 240 is closable by a sample supply container opening lid 242.

Reference sign 220 designates another inlet or quick connector or valve for introducing an inert gas into the inside of the dry box. For instance, gaseous nitrogen from a gas cylinder may be introduced through a quick connector 220 for efficiently generating a dry atmosphere of sufficiently low humidity within a small amount of time.

Depending on the specific application, it might be sufficient to only use the sample supply container 232 and/or the sample transfer device 180 as a source of cold inert gas streaming into the dry box 110. However, in order to achieve an even less humid atmosphere inside the dry box 110 in a smaller time interval, another source of inert gas like a nitrogen gas cylinder or the inert gas storage container 344 is useful.

In operation, the dry box 110 is placed by means of its frame or carrier 174 in relation to the sample transfer device 180 such that interface opening 112 is positioned above the receiving opening 282 of the sample transfer device 180. If the receiving opening 282 is closed by a receiving opening lid 284, the interface opening 112 is placed above the receiving opening lid 284 as shown in Figure 2. By the eccentric mechanism 170 which will be described in further detail in connection with Figures 3 and 4 below, the interface opening 112 is lowered onto the top surface of the sample transfer device 180 (see also Figure 1) in order to achieve an essentially closed system of the two units 180 and 110. Next, an inert gas is introduced into the dry box 110, preferably by opening the inert gas inlet 220. Instreaming inert gas displaces the air inside the dry box 110, and the humidity of the cryogenic atmosphere is measured by the measuring device 152 connected to the humidity sensor 250. As the system 100 is not hermetically sealed, humid air can be displaced through existing air leaks. A relative humidity of less than 5% can be achieved and is desirable. It is noted that introduction of inert gas into the dry box 110 can be automized by means of a control unit (which may be part of the measuring device 152) and a valve controlling the amount of instreaming inert gas by means of the humidity sensor 250 or by simply adjusting the amount of gas released from a gas cylinder.

It is preferred to keep the dead volume between the closed interface opening lid and the (transparent) receiving opening lid 284 as small as possible in order to reduce the amount of humid air inside this dead volume to a minimum. First, the interface opening lid 214 is opened such that air from said dead volume flows into the dry box 110. Then, if present, the receiving opening lid 284 of the sample transfer device 180 is removed. Typically, the inside of the sample transfer device 180 also is under cryogenic atmosphere. It is, however, also conceivable to use a sample transfer device 180 without a receiving opening lid 284 such that the cryogenic atmosphere inside the sample transfer device 180 is completed by cryogenic gas from the dry box 110.

In a next step, a sample supply container is connected to the sample supply container opening 230 of the dry box. The sample supply container opening lid 234 is opened when the inert atmosphere inside the dry box 110 has the desired low humidity. Samples can now be transferred from the sample supply container 232 onto e.g. a smaller sample carrier/grid and/or onto a sample holder/cartridge inside the receiving opening 282 of the sample transfer device 180. Also, other kinds of manipulation of samples/sample carriers/sample holders including unloading are possible without any risk of contamination or devitrification.

Figure 3 schematically shows an embodiment of the system 100 in a transparent side view. Again, the sample transfer device is depicted 180, the dry box 110 and the frame or carrier of the dry box 174. As can be seen from Figure 3, an inert gas storage container 344 is received inside the carrier or frame 174 of the dry box 110. This inert gas storage container 344 can be connected to the inert gas opening 240 as discussed in connection with Figure 2. Alternatively, according to the embodiment shown in Figure 2, instead of or in addition to an inert gas storage container a sample supply container 232 may be included into the lower part of the carrier or frame 174. In this respect, reference is made to the explanations in connection with Figure 2.

The carrier or frame 174 comprises a bottom part or base part 176 essentially extending parallel to the ground onto which the sample transfer device 180 is placed. The base part 176 of the carrier or frame 174 comprises an eccentric mechanism 170 which comprises an eccentric wheel 172 on the left and another one on the right side of the base part 176 of the carrier or frame 174 (as also shown in Figure 1). In the position of the eccentric wheel 172 as shown in Figure 3, the frame or carrier 174 is in a lowered position to enable coupling of the dry box 110 and the sample transfer device 180.

Figure 4 shows the system 100 of Figure 3 with the only difference that the eccentric wheel 172 is in another position where the base part 176 of the carrier or frame 174 is lifted up such that the dry box 110 takes a slightly tilted position and is decoupled from the sample transfer device 180.

Figure 5 schematically shows an embodiment of a dry box 110 according to the inventive concept in a perspective view similar to that in Figure 1 but without a sample transfer device.

The housing part 116 including the volume space of the dry box 110 can be made of a transparent or semi-transparent material. The dry box 110 has an interface opening 112 (see Figure 1), the frame of which is configured such that it can be placed on top of the sample transfer device 180 as shown in Figure 1. As shown in Figure 5, the dry box 110 further comprises two at least partly closable user openings providing a user access to the inside of the dry box 110, which user openings may be closed by corresponding user opening doors 164 (shown in the closed state). As can be further seen in Figure 5, the dry box 110 comprises a carrier or frame 174, which holds the housing part 116 of the dry box 110 including the interface opening 112 at a height corresponding to the height of the topside of the sample transfer device 180 as shown in Figure 1. The carrier or frame 174 comprises a base part 176 which is supported by ground and comprises two eccentric wheels 172 such that an eccentric mechanism 170 is formed which has been described in connection with Figures 3 or 4 above. In the state of Figure 5, the eccentric mechanism 170 couples the dry box 110 with the sample transfer device 180 by lowering the interface opening 112 of the dry box 110 onto the topside of the sample transfer device.

A measuring device 152 having a display for operating the device and/or for displaying relative humidity values of the inside of the housing part 116 of the dry box 110 measures the relative humidity of the atmosphere inside the housing part 116 by humidity sensor 250. A relative humidity of less than 5% can be achieved and is desirable. It is noted that introduction of inert gas into the dry box 110 can be automized by means of a control unit and/or the measuring device 152 and a valve controlling the amount of instreaming inert gas by means of the humidity sensor 250 or by simply adjusting the amount of gas released from a gas cylinder.

Further features of the dry box 110 have been discussed in connection with Figures 1 to 4 and may be individually or jointly additionally implemented in the dry box 110 of Figure 5.

### List of reference signs

- 100: system
- 110: dry box
- 112: interface opening
- 116: housing part
- 152: measuring device
- 160: user opening
- 162: foil cover
- 164: user opening door
- 170: eccentric mechanism
- 172: eccentric wheel
- 174: carrier, frame
- 176: base part
- 180: sample transfer device
- 184: transfer rod
- 185: shutter
- 186: receiving section for sample holder
- 188: connection tube
- 190: magnifying window

- 214: interface opening lid
- 220: inlet for inert gas
- 230: sample supply container opening
- 232: sample supply container
- 234: sample supply container opening lid
- 240: inert gas opening
- 242: inert gas opening lid
- 250: humidity sensor
- 282: receiving opening
- 284: receiving opening lid

- 344: inert gas storage container

## Claims

1. A system (100) for loading a sample into and/or for manipulating a sample in a sample transfer device (180) at cryogenic temperatures, comprising
the sample transfer device (180) configured to receive a sample through a receiving opening (282) of the sample transfer device (180) and configured to transfer said sample to a processing or analysing unit, and
a dry box (110) having an interface opening (112) and being configured to be connected to the sample transfer device (180) such that the interface opening (112) of the dry box (110) and the receiving opening (282) of the sample transfer device (180) are facing each other to enable a sample to be transferred from the dry box (110) into the sample transfer device (180),
wherein the dry box (110) comprises a carrier (174) for supporting the dry box (110) against ground, and wherein the dry box (110) is configured such that, in operation, the dry box (110) is placed by means of the carrier (174) in relation to the sample transfer device (180) such that the interface opening (112) is positioned above the receiving opening (282) of the sample transfer device (180), when the sample transfer device (180) is placed on the ground beneath the dry box (110).

2. The system (100) of claim 1, wherein the dry box (110) comprises an interface opening lid (214) for opening and closing the interface opening (112) of the dry box (110).

3. The system (100) according to claim 1 or 2, wherein the sample transfer device (180) comprises a receiving opening lid (284) for opening and closing the receiving opening (282) of the sample transfer device (180).

4. The system (100) according to claim 2 and 3, wherein the dry box (110) including the interface opening lid (214) in its closed state is configured to be connected to the sample transfer device (180) including the receiving opening lid (284) in its closed state.

5. The system (100) according to claim 4, wherein a distance between the interface opening lid (214) in its closed state and the receiving opening lid (284) in its closed state is in the range of 0 to 10mm, or 0 to 5mm, when the dry box (110) is connected to the sample transfer device (180).

6. The system (100) according to any one of the preceding claims, wherein the dry box (110) and the sample transfer device (180) are connectable to each other by a mechanical and/or magnetic connection.

7. The system (100) according to any one of the preceding claims, wherein, when the dry box (110) and the sample transfer device (180) are connected to each other, the resulting connection constitutes a closed or a sealed connection.

8. The system (100) according to any one of the preceding claims, wherein the dry box (110) comprises an inlet (220) for introducing an inert gas into the inside of the dry box (110).

9. The system (100) according to any one of the preceding claims, wherein the dry box (110) comprises an outlet for discharging gas out of the inside of the dry box (110).

10. The system (100) according to any one of the preceding claims, wherein the dry box (110) comprises a sample supply container opening (230) configured to be connected with a sample supply container (232).

11. The system (100) of claim 10, wherein the dry box (110) comprises a sample supply container opening lid (234) for opening and closing the sample supply container opening (230) of the dry box (110).

12. The system (100) according to any one of the preceding claims, wherein the dry box (110) comprises an inert gas opening (230, 240) configured to be connected with an inert gas storage container (344).

13. The system (100) according to any one of the preceding claims, wherein the sample transfer device (180) comprises an inert gas reservoir at cryogenic temperatures.

14. The system (100) according to any one of the preceding claims, wherein the dry box (110) comprises a humidity sensor (250) and/or a measuring device (152) for detecting a humidity inside the dry box (110).

15. The system (100) according to any one of the preceding claims, wherein the dry box (110) comprises at least one at least partly closable user opening (160) providing a user access to the inside of the dry box (110).

16. The system (100) of claim 12, wherein the dry box (110) comprises a foil cover (162) at least partly covering the user opening (160).

17. The system (100) according to claim 15 or 16, wherein the user opening (160) of the dry box (110) comprises a glove mounting for mounting a glove which extends, when mounted, into the inside of the dry box (110).

18. The system (100) according to any one of the preceding claims, wherein the dry box (110) comprises an electromechanical or mechanical coupling mechanism (170) for decoupling the dry box (110) from the sample transfer device (180) and for coupling the dry box (110) with the sample transfer device (180).

19. The system (110) according to claim 18, wherein the coupling mechanism (170) comprises an eccentric mechanism.

20. The system (100) according to claim 19, wherein the eccentric mechanism (170) comprises eccentric wheels (172) at a bottom side of the dry box (110).

21. The system (100) according to any one of the preceding claims, wherein the dry box (110) comprises a magnifying window (190) at a top side of the dry box (110).

22. A dry box (110) configured to be used within a system (100) of any one of the preceding claims, the dry box (110) having an interface opening (112) and being configured to be connected to a sample transfer device (180) such that the interface opening (112) of the dry box (110) and a receiving opening (282) of the sample transfer device (180) are facing each other to enable a sample to be transferred from the dry box (110) into the sample transfer device (180),
wherein the dry box (110) comprises a carrier (174) for supporting the dry box (110) against ground, and wherein the dry box (110) is configured such that, in operation, the dry box (110) is placed by means of the carrier (174) in relation to the sample transfer device (180) such that the interface opening (112) is positioned above the receiving opening (282) of the sample transfer device (180), when the sample transfer device (180) is placed on the ground beneath the dry box (110).

## Patentansprüche

1. System (100) zum Laden einer Probe in eine Probenübertragungsvorrichtung (180) und/oder zum Manipulieren einer Probe in dieser bei kryogenen Temperaturen, umfassend
die Probentransfervorrichtung (180), die konfiguriert ist, um eine Probe durch eine Aufnahmeöffnung (282) der Probenübertragungsvorrichtung (180) aufzunehmen und konfiguriert ist, um die Probe zu einer Verarbeitungseinheit oder einer Analyseeinheit zu übertragen, und
eine Trockenbox (110), die eine Grenzflächenöffnung (112) aufweist und konfiguriert ist, um mit der Probenübertragungsvorrichtung (180) verbunden zu werden, sodass die Grenzflächenöffnung (112) der Trockenbox (110) und die Aufnahmeöffnung (282) der Probenübertragungsvorrichtung (180) einander zugewandt sind, um die Übertragung einer Probe von der Trockenbox (110) in die Probenübertragungsvorrichtung (180) zu ermöglichen,
wobei die Trockenbox (110) einen Träger (174) zum Stützen der Trockenbox (110) auf dem Boden umfasst, und wobei die Trockenbox (110) konfiguriert ist, sodass, im Betrieb, die Trockenbox (110) mittels des Trägers (174) in Bezug auf die Probenübertragungsvorrichtung (180) platziert wird, sodass die Grenzflächenöffnung (112) über der Aufnahmeöffnung (282) der Probenübertragungsvorrichtung (180) positioniert ist, wenn die Probenübertragungsvorrichtung (180) auf dem Boden unter der Trockenbox (110) platziert ist.

2. System (100) nach Anspruch 1, wobei die Trockenbox (110) einen Grenzflächenöffnungsdeckel (214) zum Öffnen und Schließen der Grenzflächenöffnung (112) der Trockenbox (110) umfasst.

3. System (100) nach Anspruch 1 oder 2, wobei die Probenübertragungsvorrichtung (180) einen Aufnahmeöffnungsdeckel (284) zum Öffnen und Schließen der Aufnahmeöffnung (282) der Probenübertragungsvorrichtung (180) umfasst.

4. System (100) nach Anspruch 2 oder 3, wobei die Trockenbox (110), die den Grenzflächenöffnungsdeckel (214) in seinem geschlossenen Zustand einschließt, konfiguriert ist, um mit der Probenübertragungsvorrichtung (180), die den Aufnahmeöffnungsdeckel (284) in seinem geschlossenen Zustand einschließt, verbunden zu sein.

5. System (100) nach Anspruch 4, wobei ein Abstand zwischen dem Grenzflächenöffnungsdeckel (214) in seinem geschlossenen Zustand und dem Aufnahmeöffnungsdeckel (284) in seinem geschlossenen Zustand im Bereich von 0 bis 10 mm oder 0 bis 5 mm liegt, wenn die Trockenbox (110) mit der Probenübertragungsvorrichtung (180) verbunden ist.

6. System (100) nach einem der vorstehenden Ansprüche, wobei die Trockenbox (110) und die Probenübertragungsvorrichtung (180) durch eine mechanische und/oder eine magnetische Verbindung miteinander verbindbar sind.

7. System (100) nach einem der vorstehenden Ansprüche, wobei, wenn die Trockenbox (110) und die Probenübertragungsvorrichtung (180) miteinander verbunden sind, die resultierende Verbindung eine geschlossene oder abgedichtete Verbindung darstellt.

8. System (100) nach einem der vorstehenden Ansprüche, wobei die Trockenbox (110) einen Einlass (220) zum Einführen eines Inertgases in das Innere der Trockenbox (110) umfasst.

9. System (100) nach einem der vorstehenden Ansprüche, wobei die Trockenbox (110) einen Auslass zum Ablassen von Gas aus dem Inneren der Trockenbox (110) umfasst.

10. System (100) nach einem der vorstehenden Ansprüche, wobei die Trockenbox (110) eine Probenzufuhrbehälteröffnung (230) umfasst, die konfiguriert ist, um mit einem Probenzufuhrbehälter (232) verbunden zu sein.

11. System (100) nach Anspruch 10, wobei die Trockenbox (110) einen Probenzufuhrbehälteröffnungsdeckel (234) zum Öffnen und Schließen der Probenzufuhrbehälteröffnung (230) der Trockenbox (110) umfasst.

12. System (100) nach einem der vorstehenden Ansprüche, wobei die Trockenbox (110) eine Inertgasöffnung (230, 240) umfasst, die konfiguriert ist, um mit einem Inertgasvorratsbehälter (344) verbunden zu sein.

13. System (100) nach einem der vorstehenden Ansprüche, wobei die Probenübertragungsvorrichtung (180) ein Inertgasreservoir bei kryogenen Temperaturen umfasst.

14. System (100) nach einem der vorstehenden Ansprüche, wobei die Trockenbox (110) einen Feuchtigkeitssensor (250) und/oder eine Messvorrichtung (152) zum Erfassen einer Feuchtigkeit im Inneren der Trockenbox (110) umfasst.

15. System (100) nach einem der vorstehenden Ansprüche, die Trockenbox (110) mindestens eine mindestens teilweise verschließbare Benutzeröffnung (160) umfasst, die einem Benutzer Zugang zum Inneren der Trockenbox (110) bereitstellt.

16. System (100) nach Anspruch 12, wobei die Trockenbox (110) eine Folienabdeckung (162) umfasst, die die Benutzeröffnung (160) mindestens teilweise abdeckt.

17. System (100) nach Anspruch 15 oder 16, wobei die Benutzeröffnung (160) der Trockenbox (110) eine Handschuhhalterung zum Anbringen eines Handschuhs umfasst, der sich, wenn er angebracht ist, in das Innere der Trockenbox (110) hinein erstreckt.

18. System (100) nach einem der vorstehenden Ansprüche, wobei die Trockenbox (110) einen elektromechanischen oder einen mechanischen Kopplungsmechanismus (170) zum Entkoppeln der Trockenbox (110) von der Probenübertragungsvorrichtung (180) und zum Koppeln der Trockenbox (110) mit der Probenübertragungsvorrichtung (180) umfasst.

19. System (110) nach Anspruch 18, wobei der Kopplungsmechanismus (170) einen außermittigen Mechanismus umfasst.

20. System (100) nach Anspruch 19, wobei der außermittige Mechanismus (170) an einer Unterseite der Trockenbox (110) außermittige Räder (172) umfasst.

21. System (100) nach einem der vorstehenden Ansprüche, wobei die Trockenbox (110) an einer Oberseite der Trockenbox (110) ein Vergrößerungsfenster (190) umfasst.

22. Trockenbox (110), die konfiguriert ist, um innerhalb eines Systems (100) nach einem der vorstehenden Ansprüche verwendet zu werden, wobei die Trockenbox (110) eine Grenzflächenöffnung (112) aufweist und konfiguriert ist, um mit einer Probenübertragungsvorrichtung (180) verbunden zu werden, sodass die Grenzflächenöffnung (112) der Trockenbox (110) und eine Aufnahmeöffnung (282) der Probenübertragungsvorrichtung (180) einander zugewandt sind, um die Übertragung einer Probe von der Trockenbox (110) in die Probenübertragungsvorrichtung (180) zu ermöglichen,
wobei die Trockenbox (110) einen Träger (174) zum Stützen der Trockenbox (110) auf dem Boden umfasst, und wobei die Trockenbox (110) konfiguriert ist, sodass, im Betrieb, die Trockenbox (110) mittels des Trägers (174) in Bezug auf die Probenübertragungsvorrichtung (180) platziert wird, sodass die Grenzflächenöffnung (112) über der Aufnahmeöffnung (282) der Probenübertragungsvorrichtung (180) positioniert ist, wenn die Probenübertragungsvorrichtung (180) auf dem Boden unter der Trockenbox (110) platziert ist.

## Revendications

1. Système (100) de chargement d'un échantillon et/ou de manipulation d'un échantillon dans un dispositif de transfert d'échantillons (180) à des températures cryogéniques, comprenant
le dispositif de transfert d'échantillons (180) configuré pour recevoir un échantillon à travers une ouverture de réception (282) du dispositif de transfert d'échantillons (180) et configuré pour transférer ledit échantillon vers une unité de traitement ou d'analyse, et
une boîte sèche (110) présentant une ouverture d'interface (112) et étant configurée pour être reliée au dispositif de transfert d'échantillons (180) de telle sorte que l'ouverture d'interface (112) de la boîte sèche (110) et l'ouverture de réception (282) du dispositif de transfert d'échantillons (180) se font face l'une à l'autre pour permettre à un échantillon d'être transféré depuis la boîte sèche (110) jusque dans le dispositif de transfert d'échantillons (180),
dans lequel la boîte sèche (110) comprend un moyen porteur (174) pour supporter la boîte sèche (110) contre le sol, et dans lequel la boîte sèche (110) est configurée de telle sorte que, en fonctionnement, la boîte sèche (110) soit placée à l'aide du moyen porteur (174) par rapport au dispositif de transfert d'échantillons (180) de telle sorte que l'ouverture d'interface (112) soit positionnée au-dessus de l'ouverture de réception (282) du dispositif de transfert d'échantillons (180), lorsque le dispositif de transfert d'échantillons (180) est placé sur le sol au-dessous de la boîte sèche (110).

2. Système (100) selon la revendication 1, dans lequel la boîte sèche (110) comprend un couvercle d'ouverture d'interface (214) pour ouvrir et fermer l'ouverture d'interface (112) de la boîte sèche (110).

3. Système (100) selon la revendication 1 ou 2, dans lequel le dispositif de transfert d'échantillons (180) comprend un couvercle d'ouverture de réception (284) pour ouvrir et fermer l'ouverture de réception (282) du dispositif de transfert d'échantillons (180).

4. Système (100) selon la revendication 2 et 3, dans lequel la boîte sèche (110) incluant le couvercle d'ouverture d'interface (214) dans son état fermé est configurée pour être reliée au dispositif de transfert d'échantillons (180) incluant le couvercle d'ouverture de réception (284) dans son état fermé.

5. Système (100) selon la revendication 4, dans lequel une distance entre le couvercle d'ouverture d'interface (214) dans son état fermé et le couvercle d'ouverture de réception (284) dans son état fermé est comprise dans la plage de 0 à 10 mm, ou de 0 à 5 mm, lorsque la boîte sèche (110) est reliée au dispositif de transfert d'échantillons (180).

6. Système (100) selon l'une quelconque des revendications précédentes, dans lequel la boîte sèche (110) et le dispositif de transfert d'échantillons (180) peuvent être reliés l'un à l'autre par une liaison mécanique et/ou magnétique.

7. Système (100) selon l'une quelconque des revendications précédentes, dans lequel, lorsque la boîte sèche (110) et le dispositif de transfert d'échantillons (180) sont reliés l'un à l'autre, la liaison résultante constitue une liaison fermée ou étanche.

8. Système (100) selon l'une quelconque des revendications précédentes, dans lequel la boîte sèche (110) comprend une entrée (220) pour introduire un gaz inerte à l'intérieur de la boîte sèche (110).

9. Système (100) selon l'une quelconque des revendications précédentes, dans lequel la boîte sèche (110) comprend une sortie pour évacuer le gaz en dehors de l'intérieur de la boîte sèche (110).

10. Système (100) selon l'une quelconque des revendications précédentes, dans lequel la boîte sèche (110) comprend une ouverture de contenant d'alimentation en échantillon (230) configurée pour être reliée à un contenant d'alimentation en échantillon (232).

11. Système (100) selon la revendication 10, dans lequel la boîte sèche (110) comprend un couvercle d'ouverture de contenant d'alimentation en échantillon (234) pour ouvrir et fermer l'ouverture de contenant d'alimentation en échantillon (230) de la boîte sèche (110).

12. Système (100) selon l'une quelconque des revendications précédentes, dans lequel la boîte sèche (110) comprend une ouverture de gaz inerte (230, 240) configurée pour être reliée à un contenant de stockage de gaz inerte (344).

13. Système (100) selon l'une quelconque des revendications précédentes, dans lequel le dispositif de transfert d'échantillons (180) comprend un réservoir de gaz inerte à des températures cryogéniques.

14. Système (100) selon l'une quelconque des revendications précédentes, dans lequel la boîte sèche (110) comprend un capteur d'humidité (250) et/ou un dispositif de mesure (152) pour détecter une humidité à l'intérieur de la boîte sèche (110).

15. Système (100) selon l'une quelconque des revendications précédentes, dans lequel la boîte sèche (110) comprend au moins une ouverture utilisateur (160) pouvant être fermée au moins partiellement fournissant un accès utilisateur à l'intérieur de la boîte sèche (110).

16. Système (100) selon la revendication 12, dans lequel la boîte sèche (110) comprend un couvercle en feuille (162) recouvrant au moins partiellement l'ouverture utilisateur (160).

17. Système (100) selon la revendication 15 ou 16, dans lequel l'ouverture utilisateur (160) de la boîte sèche (110) comprend un montage de gant pour monter un gant qui s'étend, lorsqu'il est monté, jusqu'à l'intérieur de la boîte sèche (110).

18. Système (100) selon l'une quelconque des revendications précédentes, dans lequel la boîte sèche (110) comprend un mécanisme de couplage électromécanique ou mécanique (170) pour découpler la boîte sèche (110) du dispositif de transfert d'échantillons (180) et pour coupler la boîte sèche (110) au dispositif de transfert d'échantillons (180).

19. Système (110) selon la revendication 18, dans lequel le mécanisme de couplage (170) comprend un mécanisme excentrique.

20. Système (100) selon la revendication 19, dans lequel le mécanisme excentrique (170) comprend des roues excentriques (172) au niveau d'un côté inférieur de la boîte sèche (110).

21. Système (100) selon l'une quelconque des revendications précédentes, dans lequel la boîte sèche (110) comprend une fenêtre grossissante (190) au niveau d'un côté supérieur de la boîte sèche (110).

22. Boîte sèche (110) configurée pour être utilisée à l'intérieur d'un système (100) selon l'une quelconque des revendications précédentes, la boîte sèche (110) présentant une ouverture d'interface (112) et étant configurée pour être reliée à un dispositif de transfert d'échantillons (180) de telle sorte que l'ouverture d'interface (112) de la boîte sèche (110) et une ouverture de réception (282) du dispositif de transfert d'échantillons (180) se font face l'une à l'autre pour permettre à un échantillon d'être transféré depuis la boîte sèche (110) jusque dans le dispositif de transfert d'échantillons (180),
dans lequel la boîte sèche (110) comprend un moyen porteur (174) pour supporter la boîte sèche (110) contre le sol, et dans lequel la boîte sèche (110) est configurée de telle sorte que, en fonctionnement, la boîte sèche (110) soit placée à l'aide du moyen porteur (174) par rapport au dispositif de transfert d'échantillons (180) de telle sorte que l'ouverture d'interface (112) soit positionnée au-dessus de l'ouverture de réception (282) du dispositif de transfert d'échantillons (180), lorsque le dispositif de transfert d'échantillons (180) est placé sur le sol au-dessous de la boîte sèche (110).
